Europäisches Patentamt

European Patent Office

Office européen des brevets

(11) Veröffentlichungsnummer: **0 361 152**
**A2**

# (12) EUROPÄISCHE PATENTANMELDUNG

(21) Anmeldenummer: 89116455.0

(51) Int. Cl.5 **G02F 1/21**

(22) Anmeldetag: 06.09.89

(30) Priorität: 30.09.88 DE 3833296

(43) Veröffentlichungstag der Anmeldung:
04.04.90 Patentblatt 90/14

(84) Benannte Vertragsstaaten:
DE FR GB IT NL

(71) Anmelder: **Siemens Aktiengesellschaft**
**Wittelsbacherplatz 2**
**D-8000 München 2(DE)**

(72) Erfinder: **Noll, Bernd, Dipl.-Ing.**
**Zillertalstrasse 69**
**D-8000 München 70(DE)**
Erfinder: **Eberhardt, Uwe, Dipl.-Ing.**
**Helmut-Käutner-Strasse 17**
**D-8000 München 83(DE)**

(54) Vorrichtung zur Erzeugung orthogonal zueinander polarisierter optischer Wellen aus einer zugeführten optischen Welle.

(57) Eine Vorrichtung zur Erzeugung orthogonal zueinander polarisierter optischer Wellen aus einer zu-geführten optischen Welle zur Ermöglichung eines polarisationsunabhängigen optischen Überlagerungs-empfangs soll unter minimalen Anforderungen an die Reproduzierbarkeit der Herstellungsbedingungen realisiert werden können. Eine derartig realisierbare Vorrichtung weist ein integriert optisches Mach-Zehnder-Interferometer (1) auf, dem ein integriert optischer Richtkoppler (RK1) oder eine Wellenleiter-gabel (WG) vor- und ein integriert optischer Richt-koppler (RK2) nachgeschaltet ist.

FIG 2

EP 0 361 152 A2

# Vorrichtung zur Erzeugung orthogonal zueinander polarisierter optischer Wellen aus einer zugeführten optischen Welle

Die Erfindung betrifft gemäß dem Oberbegriff des Patentanspruchs 1 eine Vorrichtung zur Erzeugung orthogonal zueinander polarisierter optischer Wellen aus einer zugeführten optischen Welle.

Zur Realisierung kohärenter optischer Nachrichtensysteme gibt es eine Fülle von Varianten. Ein Vorschlag, der Polarisations-Quadraturempfang, umgeht das Problem schwankender Polarisationsrichtung des auf einer Strecke zugeführten Signals dadurch, daß dieses Signal im Empfänger mit Hilfe einer Vorrichtung der genannten Art in zwei orthogonal zueinander polarisierte Teilsignale, beispielsweise TE- und TM-Signale, zerlegt sind, welche getrennt mit dem Lokaloszillator überlagert werden.

Derartige Vorrichtungen wurden bisher hauptsächlich in freier Strahlausbreitung sowie in Faserausführung realisiert. Die erstgenannte Realisierung hat den Nachteil, daß ein Übergang von geführter optischer Welle in eine frei sich ausbreitende Welle nötig ist. Bei der zweitgenannten Realisierung mit Hilfe der Faser hat man Schwierigkeiten bei der Herstellung sowie mit der Empfindlichkeit der Bauelementeigenschaften auf Temperaturschwankungen oder Verbiegung der Faser.

Versuche zu integriert optischen Vorrichtungen der genannten Art sind bis jetzt nur vereinzelt bekannt (siehe dazu Electron. Lett. 23 (1987), S. 614-616). Man nützt dort die polarisationsabhängige Koppelstärke eines Richtkopplers aus und dimensioniert diesen so, daß z.B. die TE-polarisierte optische Welle vollständig in einem zweiten optischen Wellenleiter des Richtkopplers überkoppelt, während die TM-polari sierte Welle ganz im ersten Wellenleiter dieses Kopplers verbleibt. Kleine Schwankungen im Herstellungsprozeß wirken sich ungünstig auf die Funktiontüchtigkeit des Bauelements aus und rufen störendes Nebensprechen hervor. Nach der genannten Literaturstelle kann man sich damit behelfen, den Richtkoppler mit einer Elektrode zu versehen, um so wenigstens das Koppel-verhalten der TM-polarisierten Welle steuern zu können. Für die TE-polarisierte Welle besteht keine Möglichkeit, das Koppelverhalten zu steuern.

Aufgabe der Erfindung ist es, eine Vorrichtung der eingangs genannten Art anzugeben, die unter minimalen Anforderungen an die Reproduzierbarkeit der Herstellungsbedingungen realisiert werden kann.

Diese Aufgabe wird durch die im kennzeichnenden Teil des Patentanspruchs 1 angegebenen Merkmale gelöst.

Bevorzugte und vorteilhafte Ausgestaltungen dieser Vorrichtung gehen aus den Unteransprüchen 2 bis 10 hervor.

Eine besonders bevorzugte Ausgestaltung der erfindungsgemäßen Vorrichtung weist neben den Merkmalen des Anspruchs 1 die Merkmale des Anspruchs 4 oder 5, die Merkmale des Anspruchs 6 oder 8 und die Merkmale des Anspruchs 9 auf, wobei die in Anspruch 6 und 9 genannten Richtkoppler vorzugsweise 3dB-Richtkoppler sind (Ansprüche 7 und 10). Diese Richtkoppler sollen möglichst polarisationsunabhängig sein. Derartige Richtkoppler sind recht einfach herstellbar und stellen bei der erfindungsgemäßen Vorrichtung die größten Anforderungen an die Technologie.

Die Erfindung wird anhand der Figuren in der folgenden Beschreibung beispielhaft näher erläutert. Von den Figuren zeigen:

Figur 1 in schematischer Darstellung einen zum integriert optischen Mach-Zender-Interferometer der erfindungs gemäßen Vorrichtung äquivalenten Aufbau aus der klassischen Optik zur Erläuterung des Funktionsprinzips des integriert optischen Interferometers,

Figur 2 eine Draufsicht auf ein erstes Ausführungsbeispiel der erfindungsgemäßen Vorrichtung mit einem eingangsseitigen und ausgangsseitigen Richtkoppler,

Figur 3 ein zweites Ausführungsbeispiel der erfindungsgemäßen Vorrichtung mit einer eingangsseitigen Wellenleitergabel und einem ausgangsseitigen Richtkoppler,

Figur 4 und Figur 5 jeweils einen Querschnitt durch das Interferometers des Ausführungsbeispiels nach Figur 2 längs der Schnittlinie IV - IV, die sich durch verschiedene angelegte elektrische Felder voneinander unterscheiden,

Figur 6 eine Draufsicht auf eine konkrete Realisierung des Ausführungsbeispiels nach Figur 3,

Figur 7 einen Querschnitt durch das Enterferometer der Vorrichtung nach Figur 6 längs der Schnittlinie VII-VII, und

Figur 8 einen Schnitt durch das Interferometer der Vorrichtung nach Figur 6 längs der Schnittlinie VIII-VIII.

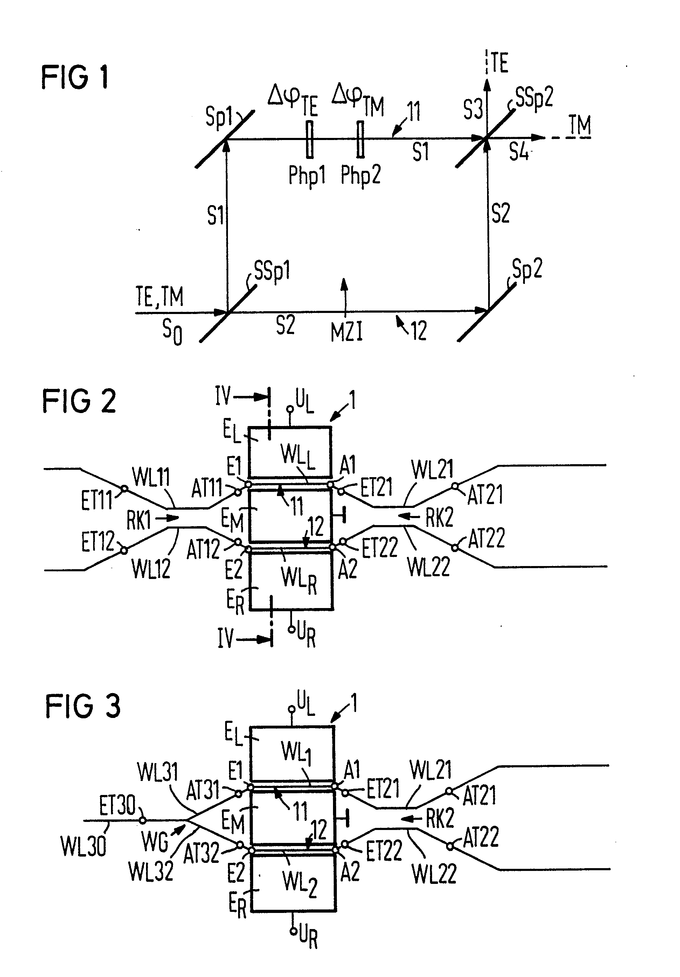

Bei dem in Figur 1 dargestellten klassischen Aufbau mit freier Strahlausbreitung wird die zugeführte optische Welle, die in beliebiger Polarisationsrichtung polarisiert sein und Komponenten sowohl in der TE- als auch in der TM-Polarisationsrichtung enthalten kann, mit einem polarisationsunabhängigen Strahlteiler SSp1, vorzugsweise einem 50%-Strahlteiler in zwei optische Wellen S1 und S2 aufgeteilt und den gleich langen Armen 11 und 12 des Mach-Zender-Interferometers MZI zugeführt.

Beispielsweise sind in einem Arm 11 zwei phasenverzögernde Scheiben Php1 und Php2 angeordnet, von denen eine, beispiels weise die Scheibe Php1, nur auf die TE-Polarisation und die andere Scheibe Php2 nur auf die TM-Polarisation phasenverschiebend wirkt. Die aus der Scheibe Php1 austretende optische Welle S1 mit TE-Polarisation ist dann gegenüber der optischen Welle S2 mit TE-Polarisation im anderen Interferometerarm 12 um eine bestimmte Phasendifferenz $\Delta\phi_{TE}$ phasenverschoben. Die aus der Scheibe Php2 austretende optische Welle S1 mit TM-Polarisation ist gegenüber der im anderen Interferometerarm 12 geführten optischen Welle S2 mit TM-Polarisation um eine Phasendifferenz $\Delta\phi_{TM}$ phasenverschoben. Wählt man für diese Phasendifferenzen $\Delta\phi_{TE}$ und $\Delta\phi_{TM}$ geeignete Werte, so überlagern sich an einem zweiten polarisationsunabhängigen Strahlteiler SSp2, die in den beiden Interferometerarmen 11 und 12 zugeführten und gegeneinander phasenverschobenen optischen Wellen S1 und S2 mit TE-Polarisation konstruktiv und diese überlagerten Wellen treten auf einer Seite des Strahlteilers SSp2 als Welle S3 mit TE-Polarisation aus. Auf der anderen Seite des Strahlteilers SSp2 tritt dagegen eine optische Welle S4 mit TM-Polarisation aus.

Die beiden Spiegel Sp1 und Sp2 im Aufbau nach Figur 1 dienen lediglich zur Umlenkung der in den zugeordneten Interferometerarmen 11 bzw. 12 geführten optischen Wellen S1 bzw. S2.

Die Figur 2 zeigt ein erstes Ausführungsbeispiel einer erfindungsgemäßen Vorrichtung mit integriert optischem Enterferometer, die dem klassisch optischen Aufbau nach Figur 1 entspricht.

Bei der Vorrichtung nach Figur 2 bestehen die Interferometerarme 11 und 12 des auf einem Substrat aus elektrooptischem Material integrierten Mach-Zender-Interferometers 1 aus zwei auf dem Substrat integrierten optischen Wellenleitern $WL_L$ bzw. $WL_R$. Die Phasendifferenz $\Delta\phi_{TE}$ und $\Delta\phi_{TM}$ werden durch ein elektrisches Feld hervorgerufen, welches die Wellenleiter $WL_L$ und $WL_R$ durchsetzt. Dieses elektrische Feld wird mit Hilfe von auf oder über dem Substrat angeordneten Elektroden $E_L$, $E_M$ und $E_R$ erzeugt, an die Spannungen $U_L$, $U_0$ und $U_R$ anlegbar sind.

Anstelle des elektrooptischen Effekts können auch andere Effekte verwendet werden, welche die Brechzahl der Wellenleiter verändern können. Beispiele sind der magnetooptische, elastooptische oder thermooptische Effekt. En diesen Fällen besteht das Substrat aus einem Material, das diesen Effekt zeigt und es ist eine Einrichtung vorgesehen, welche unter Ausnutzung des betreffenden Effekts die Brechzahl der Wellenleiter verändert.

Dem eingangsseitigen Strahlteiler Ssp1 des Aufbaus nach Figur 1 entspricht bei dem ersten Ausführungsbeispiel nach Figur 2 der eingangsseitige polarisationsunabhängige Richtkoppler RK1. Dieser Richtkoppler RK1 ist auf dem Substrat integriert und weist in bekannter Weise zwei integrierte optische Wellenleiter WL11 und WL12 auf, die zwei Eingangstore ET11 und ET12 sowie zwei Ausgangstore AT11 bzw. AT12 des Kopplers definieren.

Das Ausgangstor AT11 ist mit einem Eingang E1 des einen Interferometerarms 11 und das Ausgangstor AT12 mit einem Eingang E2 des anderen Interferometerarms 12 verbunden.

Eine in das Eingangstor ET11 oder das Eingangstor ET12 eingekoppelte zugeführte optische Welle wird auf die Ausgangstore AT11 und AT12 verteilt, so daß jedem Interferometerarm 11 und 12 jeweils ein Anteil der zugeführten optischen Welle zugeleitet wird.

Vorzugsweise ist der eingangsseitige Richtkoppler ein 3dB-Richtkoppler, der in Bezug auf zulässige Toleranzen im Koppelverhältnis günstig ist.

Dem ausgangsseitigen Strahlteiler SSp2 des Aufbaus nach Figur 1 entspricht bei dem ersten Ausführungsbeispiel nach Figur 2 der ausgangsseitige polarisationsunabhängige Richtkoppler RK2. Auch dieser Richtkoppler RK2 ist auf dem Substrat integriert und besteht in bekannter Weise aus zwei integrierten Wellenleitern WL21 und WL22, die zwei Eingangstore ET21 und ET22 sowie zwei Ausgangstore AT21 und AT22 definieren.

Das Eingangstor ET21 ist an einen Ausgang A1 des Interferometerarms 11 und das Eingangstor ET22 an einen Ausgang A2 des anderen Interferometerarms 12 gekoppelt. Den Ausgangstoren AT21 und AT22 des ausgangsseitigen Richtkopplers RK2 sind die orthogonal zueinander polarisierten optischen Wellen zu entnehmen.

In der Figur 3 ist ein zweites Ausführungsbeispiel einer erfindungsgemäßen Vorrichtung mit integriert optischem Interferometer 1 dargestellt, die ebenfalls dem klassisch optischen Aufbau nach Figur 1 entspricht.

Dieses zweite Ausführungsbeispiel unterscheidet sich von dem ersten Ausführungsbeispeil nach Figur 2 lediglich dadurch, daß der eingangsseitige Richtkoppler RK1 des ersten Ausführungsbeispiels in dem zweiten Ausführungsbeispiel durch eine y-förmige Wellenleitergabel WG ersetzt ist, die dem eingangsseitigen Strahlteiler SSp1 des Aufbaus nach Figur 1 entspricht.

Die Wellenleitergabel WG ist auf dem Substrat integriert und weist drei integrierte Wellenleiterabschnitte WL30, WL31 und WL32 auf, von denen der Abschnitt WL30 ein Eingangstor ET31 und die beiden anderen Abschnitte WL31 und WL32 jeweils ein Ausgangstor AT31 bzw. AT32 der Gabel WG definieren.

Das Ausgangstor AT31 ist an den Eingang E1 des einen Interferometers 11 und das Ausgangstor AT32 an den Eingang E2 des anderen Interferometerarms 12 gekoppelt.

Die Wellenleitergabel WG verteilt eine in das Eingangstor ET31 eingekoppelte zugeführte optische Welle auf die beiden Interferometerarme 11 und 12.

Die in den Figuren 2 und 3 dargestellten und vorstehend näher bezeichneten Eingangs- und Ausgangstore sowie Eingänge und Ausgänge müssen nicht real vorhanden sein. Die Wellenleiter WL11, $WL_L$ und WL21 bzw. WL12, $WL_R$ und WL22 in Figur 2 können beispielsweise jeweils einen durchgehenden Wellenleiterzug bilden. Analoges gilt für die Wellenleiterabschnitte und Wellenleiter beim zweiten Ausführungsbeispiel nach Figur 3.

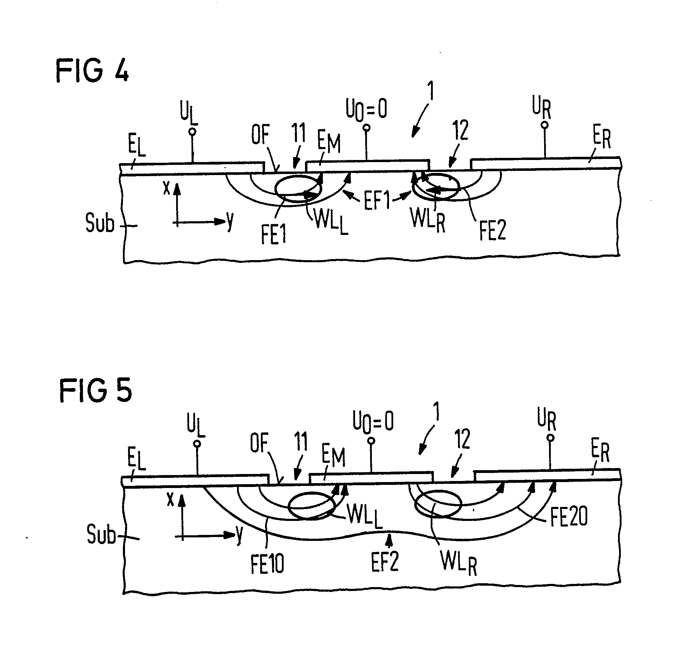

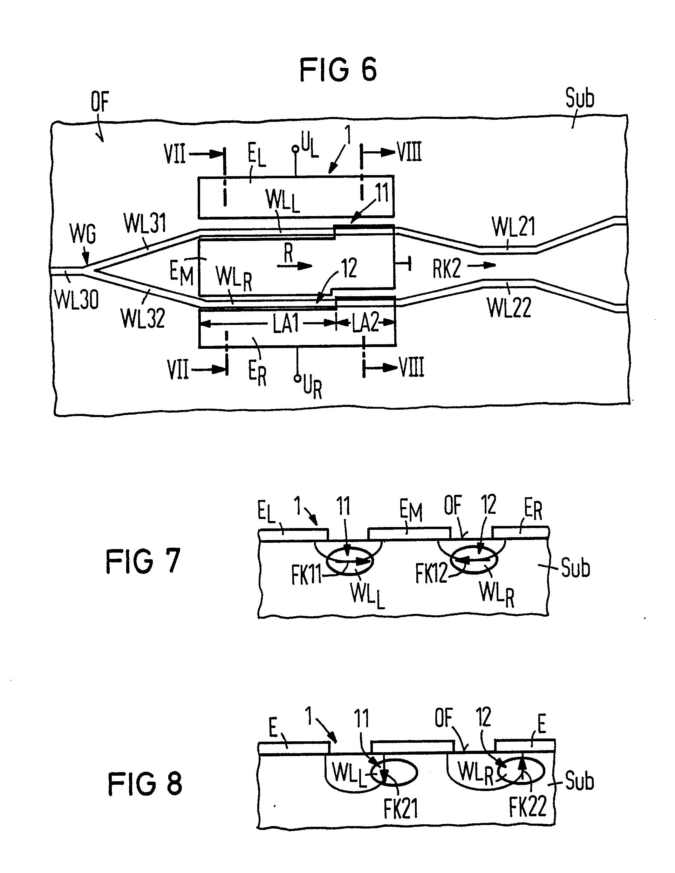

Die Wirkungsweise der Vorrichtung mit dem des integriert optischen Interferometer 1 wird anhand der Figuren 4 und 5 am Beispiel eines Substrats Sub aus Lithiumniobat erläutert. Die Figuren 4 und 5 zeigen jeweils einen Querschnitt längs der Schnittlinie IV-IV durch das Interferometer 1 nach Figur 2. Danach befinden sich die beiden Wellenleiter $WL_L$ und $WL_R$ der beiden Interferometerarme 11 und 12 unter der Oberfläche OF des Substrates Sub aus Lithiumniobat. Auf oder über der Oberfläche OF sind die Elektroden $E_L$, $E_M$ und $E_R$ angeordnet. Ohne Beschränkung der Allgemeinheit wird für das Folgende angenommen, daß die zwischen den Wellenleitern $WL_L$ und $WL_R$ angeordnete Elektrode $E_M$ geerdet ist, d.h. an dieser Elektrode liegt die Spannung $U_O = 0$. An die links von dem Wellenleiter $WL_L$ angeordnete Elektrode $E_L$ wird eine Spannung $U_L$ und an die rechts vom Wellenleiter $WL_R$ angeordnete Elektrode $E_R$ wird eine Spannung $U_R$ angelegt.

Der Kristallschnitt des Substrats Sub aus Lithiumniobat ist beispielsweise so gewählt, daß die z-Achse senkrecht zur Oberfläche OF steht und die y-Achse senkrecht zur Ausbreitungsrichtung x einer in den Wellenleitern $WL_L$ und $WL_R$ geführten optischen Welle ist.

Eine gerade Spannungsverteilung an den Elektroden $E_L$, $E_M$ und $E_R$ liegt vor, wenn $U_L = U_R$ ist. Eine solche gerade Spannungsverteilung erzeugt ein elektrisches Feld EF1, dessen Feldlinien FE1 und FE2 so verlaufen und gerichtet sind, wie es in der Figur 4 angedeutet ist.

Eine ungerade Spannungsverteilung an den Elektroden $E_L$, $E_M$ und $E_R$ liegt vor, wenn $U_L = -U_R$ gilt. Eine solche ungerade Spannungsverteilung ruft ein Feld EF2 hervor, dessen Feld linien FE10 und FE20 so verlaufen und gerichtet sind, wie es in der Figur 5 angedeutet ist.

Eine beliebige Spannungsverteilung, bei der $U_L$ und $U_R$ betragsmäßig verschieden voneinander sein können, entsteht aus der Überlagerung einer geraden und ungeraden Spannungsverteilung.

Die in den Figuren 1 bis 5 dargestellten Vorrichtungen arbeiten so, daß der eingangsseitige Richtkoppler RK1 oder die Wellenleitergabel WG die zugeführte optische Welle gleichmäßig in zwei Anteile aufteilt, die jeweils einem Interferometerarm 11 bzw. 12 zugeführt werden. Im Bereich des Interferometers 1 wird durch Anlegen der Spannungen $U_L$ und $U_R$ an die äußeren Elektroden $E_L$ und $E_R$ ein elektrisches Feld im Substrat Sub erzeugt. Dieses elektrische Feld ruft durch den elektro-optischen Effekt eine Brechzahldifferenz $\Delta n_{TE}$ für eine TE-polarisierte Welle und $\Delta n_{TM}$ für eine TM-polarisierte Welle zwischen den beiden Wellenleitern $WL_L$ und $WL_R$ hervor. Dabei ist $\Delta n_{TE}$ proportional zu $C_1 (U_L + U_R) + C2 (U_L-U_R)$ und $\Delta n_{TM}$ proportional zu $U_L-U_R$. $C_1$ und $C_2$ sind bestimmte Konstanten.

Wählt man $U_L + U_R$ so, daß zwischen den in beiden Interferometerarmen 11 und 12 geführten Anteilen einer zugeführten TE-polarisierten optischen Welle eine geeignete Phasendifferenz erreicht wird, so koppelt die TE-polarisierte optische Welle vollständig in ein Ausgangstor AT 21 oder AT22 des ausgangsseitigen Richtkopplers RK2. Analog wählt man $U_L-U_R$ so, daß eine zugeführte TM-polarisierte Welle am anderen Ausgangstor AT22 bzw. AT21 des ausgangsseitigen Richtkopplers RK2 erscheint.

In der Figur 6 ist das zweite Ausführungsbeispiel nach Figur 3 auf einem Substrat Sub integriert dargestellt. Die Ausführungsform nach Figur 6 weist die vorteilhafte Besonderheit auf, daß die mittlere Elektrode $E_M$ und die Elektrode $E_R$ in einem ersten Längsabschnitt LA1 ähnlich wie die Elektrode $E_L$ neben den Wellenleitern $WL_L$ und $WL_R$ verlaufen, während in einem zweiten Längsabschnitt LA2 die mittlere Elektrode $E_M$ den Wellenleiter WL und die Elektrode $E_R$ den Wellenleiter $WL_R$ überlappt. Dadurch wird erreicht, daß im ersten Längsabschnitt LA1 die horizontale komponente FK11 und FK12 des elektrischen Feldes in den Wellenleitern $WL_L$ und $WL_R$ vorherrscht und mit dem Nahfeld der in diesen Wellenleitern geführten optischen Welle optimal überlappt (Figure 7), während im zweiten Längsabschnisit LA2 in den Wellenleitern $WL_L$ und $WL_R$ die vertikale Komponente FK21 bzw. FK22 des elektrischen Feldes vorherrscht und optimal mit dem Nahfeld der in diesen Wellenleitern geführten optischen Wellen überlappt (Figure 8).

## Ansprüche

1. Vorrichtung zur Erzeugung orthogonal zueinander polarisierter optischer Wellen aus einer zugeführten optischen Welle,
**gekennzeichnet durch**
ein integriert optisches Mach-Zender-Interferometer (1) mit zwei jeweils die beiden orthogonal zueinander polarisierten optischen Wellen führenden Interferometerarmen (11, 12), in welche diese beiden Wellen in Form eines Anteils der zugeführten optischen Welle einkoppelbar sind und die auf die beiden Polarisationsrichtungen (TE- und TM-Richtung) derart phasenverschiebend wirken, daß in beiden Armen (11, 12) geführte optische Wellen einer (TE- oder TM-Richtung) der beiden zueinander orthogonalen Polarisationsrichtungen (TE-und TM-Richtung) relativ zueinander um eine dieser einen Richtung (TE- bzw. TM-Richtung) zugeordnete Phasendifferenz ($\Delta\phi_{TE}$ bzw. $\Delta\phi_{TM}$) und in beiden Armen (11, 12) geführte optische Wellen der anderen Polarisationsrichtung (TM- bzw. TE-Richtung) relativ zueinander um eine dieser anderen Richtung (TM- bzw. TE-Richtung) zugeordente Phasendifferenz ($\Delta\phi_{TM}$ bzw. $\Delta\phi_{TE}$) verschoben werden, wobei die aus beiden Armen (11, 12) ausgekoppelten und relativ zueinander phasenverschobenen optischen Wellen der einen Polarisationsrichtung (TE- bzw. TM-Richtung) miteinander und die aus beiden Armen (11, 12) ausgekoppelten und relativ zueinander phasenverschobenen optischen Wellen der anderen Polarisationsrichtung (TM- bzw. TE-Richtung miteinander überlagerbar sind.

2. Vorrichtung nach Anspruch 1, **dadurch gekennzeichnet**, daß ein Interferometerarm (11, 12) einen integriert optischen Wellenleiter ($WL_L$, $WL_R$) aus einem Material aufweist, dessen Brechzahl durch Anlegen eines bestimmten physikalischen Feldes (EF1, EF2) veränderbar ist und daß eine Einrichtung ($E_L$, $E_M$; $E_R$, $E_M$) zur Erzeugung des bestimmten elektrischen Feldes (EF1, EF2) im Wellenleiter ($WL_L$, $WL_R$) vorgesehen ist.

3. Vorrichtung nach Anspruch 2, **dadurch gekennzeichnet**, daß das erzeugte Feld (EF1, EF2) in einem ersten Längsabschnitt (LA1) des Wellenleiters ($WL_L$, $WL_R$) in einer Richtung eine vorherrschende Komponente (FK11, FK12 oder FK21, FK22), und in einem zweiten Längsabschnitt (LA2) des Wellenleiters ($WL_L$, $WL_R$) in einer anderen Richtung eine vorherrschende Komponente (FK21, FK22 bzw. FK11, FK12) aufweist, wobei jede vorherrschende Feldkomponente (FK11, FK12; FK21, FK22) den Wellenleiter ($WL_L$, $WL_R$) durchsetzt.

4. Vorrichtung nach Anspruch 2 oder 3, **dadurch gekennzeichnet**, daß der Wellenleiter ($WL_L$, $WL_R$) aus elektrooptischem Material besteht, und daß die Einrichtung ($EL_L$, $EL_M$; $EL_R$, $EL_M$) zum Erzeugen des bestimmten Feldes ein elektrisches Feld (EF1, EF2) mit im Wellenleiter ($WL_L$, $WL_R$) quer zu dessen Längsrichtung (R) verlaufenden Feldlinien (FE1, FE2) erzeugt.

5. Vorrichtung nach Anspruch 3 und 4, **dadurch gekennzeichnet**, daß die Einrichtung ($EL_L$, $EL_M$; $EL_R$, $EL_M$) zur Erzeugung des elektrischen Feldes (EF1, EF2) im ersten Längsabschnitt (LA1) des Wellenleiters ($WL_L$, $WL_R$) ein elektrisches Feld mit einer in einer Polarisationsrichtung (TE- oder TM-Richtung) vorherrschenden Komponente (FK11, FK12; FK21, FK22) und ım zweiten Längsabschnitt (LA2) ein elektrisches Feld mit einer in der anderen Polarisationsrichtung (TM- bzw. TE-Richtung) vorherrschenden Komponente (FK21, FK2$_2$ bzw. FK11, FK12) erzeugt.

6. Vorrichtung nach einem der vorhergehenden Ansprüche, **gekennzeichnet durch** einen eingangsseitigen integriert optischen Richtkoppler (RK1) mit zwei Eingangstoren (ET11, ET12) und zwei Ausgangstoren (AT11, AT12), wobei ein Ausgangstor (AT11) an einen Eingang (E1) eines Interferometerarmes (11) und das andere Ausgangstor (AT12) an einen Eingang (E2) des anderen Interferometerarmes (12) des Interferometers (1) angekoppelt ist, und wobei über ein Eingangstor (E11 oder E12) die zuzuführende optische Welle einkoppelbar ist.

7. Vorrichtung nach Anspruch 6, **dadurch gekennzeichnet**, daß der eingangsseitige Richtkoppler (RK1) ein 3dB-Richtkoppler ist.

8. Vorrichtung nach einem der Ansprüche 1 bis 5, **gekennzeichnet durch** eine eingangsseitige integriert optische Wellenleitergabel (WG) mit einem Eingangstor (ET31) und zwei Ausgangstoren (AT31, AT32), wobei ein Ausgangstor (AT31) der Gabel (WG) an einen Eingang (E1) eines Interferometerarmes (11) und das andere Ausgangstor (AT32) an einem Eingang (E2) des anderen Interferometerarmes (12) des Interferometers (1) gekoppelt ist, und wobei über das Eingangstor (ET31) der Wellenleitergabel (WG) die zuzuführende optische Welle einkoppelbar ist.

9. Vorrichtung nach einem der vorhergehenden ·Ansprüche, **gekennzeichnet durch** einen ausgangsseitigen integriert optischen Richtkoppler (RK2) mit zwei Eingangstoren ET21, ET22) und zwei Ausgangstoren (AT21, AT22), wobei ein Eingangstor (ET21) an einen Ausgang (A1) eines Interferometerarmes (11) und das andere Eingangstor (ET22) an einen Ausgang (A2) des anderen Interferometerarmes (12) gekoppelt ist, und wobei den Ausgangstoren (AT21, AT22) des ausgangsseitigen Richtkopplers (RK2) orthogonal zueinander polarisierte optische Wellen entnehmbar sind.

10. Vorrichtung nach Anspruch 9, **dadurch gekennzeichnet**, daß der ausgangsseitige optische Richtkoppler (RK2) ein 3-dB-Richtkoppler ist.

FIG 1

FIG 2

FIG 3

FIG 4

FIG 5

# FIG 6

# FIG 7

# FIG 8